# EUROPEAN PATENT APPLICATION

(11) **EP 3 226 100 A1**
(43) Date of publication of application: **04.10.2017**
(21) Application number: 15863009.5
(22) Date of filing: 13.11.2015
(51) Int. Cl.: G05G 5/03, G05G 1/08

(54) **ROTATIONAL OPERATION DEVICE**

(30) Priority: 27.11.2014 JP 2014240287
(71) Applicant: Kabushiki Kaisha Tokai-Rika-Denki-Seisakusho, Niwa-gun, Aichi 480-0195 (JP); TOYOTA JIDOSHA KABUSHIKI KAISHA, Toyota-shi, Aichi-ken 471-8571 (JP)
(72) Inventor: URUSHIBATA, Takanori, Niwa-gun Aichi 480-0195 (JP)
(74) Representative: TBK
(86) International application number: PCT/JP2015/081976
(87) International publication number: WO 2016/084625

(57) **Abstract**

A rotational operation device includes a rotation shaft that rotates when an operation member is operated, a holder fixed to the rotation shaft, a helical torsion spring (42) fitted onto the rotation shaft and tightened when pushed by the holder in a rotation direction of the rotation shaft, and a guide tube (41) fitted onto the rotation shaft and fitted into the helical torsion spring (42). The guide tube (41) includes an engagement portion (41 b) having an outer diameter (D2) that is greater than a tightened state inner diameter of the helical torsion spring (42) and less than an initial inner diameter of the helical torsion spring (42). The engagement portion (41 b) has a length (B) that is less than a length of the helical torsion spring (42) in the axial direction of the helical torsion spring (42).

## Description

### TECHNICAL FIELD

The present invention relates to a rotational operation device that produces operational reaction force with a helical torsion spring.

### BACKGROUND ART

Patent document 1 discloses a rotational operation device including a steering shaft that rotates when a steering wheel is operated, a holder fixed to the steering shaft, and a helical torsion spring fitted onto the steering shaft. The helical torsion spring is tightened when pushed by the holder in a rotation direction of the steering shaft. In this structure, the rotation of the steering shaft tightens the helical torsion spring and produces operational reaction force. This allows a user to perceive the operational reaction force.

### PRIOR ART DOCUMENT

### PATENT DOCUMENT

Patent Document 1: Japanese Laid-Open Patent Publication No. 2014-41469

### SUMMARY OF THE INVENTION

### PROBLEMS THAT ARE TO BE SOLVED BY THE INVENTION

In the prior art, when the rotation angle of the steering wheel increases, the operational reaction force does not change near a terminal end of the rotation.

It is an object of the present invention to provide a rotational operation device capable of changing operational reaction force.

### MEANS FOR SOLVING THE PROBLEM

A rotational operation device according to one aspect of the present invention includes a rotation shaft that rotates when an operation member is operated, a holder fixed to the rotation shaft, a helical torsion spring fitted onto the rotation shaft and tightened when pushed by the holder in a rotation direction of the rotation shaft, and a guide tube fitted onto the rotation shaft and fitted into the helical torsion spring. The guide tube includes an engagement portion having an outer diameter that is greater than a tightened state inner diameter of the helical torsion spring and less than an initial inner diameter of the helical torsion spring. The engagement portion has a length that is less than a length of the helical torsion spring in an axial direction of the helical torsion spring.

In this structure, when the operation member is not operated, the inner diameter of the helical torsion spring continues to be the initial inner diameter. From this state, when operation of the operation member rotates the steering shaft, the helical torsion spring tightens. This decreases the inner diameter of the coil from the initial inner diameter. After the inner diameter of the coil becomes equal to the outer diameter of the engagement portion, only the portion of the coil that is not in contact with the engagement portion tightens. Thus, the virtual number of windings of the helical torsion spring is decreased (this is because portion of coil that is in contact with engagement portion does not tighten). Since the spring load is inversely proportional to the number of windings, the increasing rate of the operational reaction force with respect to the rotation angle increases after the inner diameter of the coil becomes equal to the outer diameter of the engagement portion. This allows operational reaction force to change.

A rotational operation device according to another aspect of the present invention includes a rotation shaft that rotates when an operation member is operated, a holder fixed to the rotation shaft, a helical torsion spring fitted onto the rotation shaft and tightened when pushed by the holder in a rotation direction of the rotation shaft, and a collar fitted onto the helical torsion spring. The collar includes an engagement portion having an inner diameter that is greater than a tightened state outer diameter of the helical torsion spring and less than an initial outer diameter of the helical torsion spring. The engagement portion has a length that is less than a length of the helical torsion spring in an axial direction of the helical torsion spring.

In this structure, when the operation member is not operated, in the helical torsion spring, the coil portion that is in contact with the collar is tightened so that the outer diameter is equal to the inner diameter of the engagement portion, and the remaining coil portion that is not in contact with the engagement portion continues to have an outer diameter that is the initial outer diameter. From this state, when the operation member is operated and the steering shaft is rotated, only the coil portion of the helical torsion spring that is not in contact with the engagement portion is tightened. This decreases the outer diameter of the coil portion from the initial outer diameter. Consequently, after the outer diameter of the coil portion becomes equal to the inner diameter of the engagement portion, the coil is entirely tightened. This increases the virtual number of windings of the helical torsion spring. Since the spring load is inversely proportional to the number of windings, the increasing rate of the operational reaction force with respect to the rotation angle decreases after the outer diameter of the coil becomes equal to the inner diameter of the engagement portion. This allows operational reaction force to change.

### EFFECT OF THE INVENTION

The present invention allows operational reaction force to change.

### BRIEF DESCRIPTION OF THE DRAWINGS

Fig. 1 is an exploded perspective view showing a first embodiment of a steering device.
Fig. 2A is a cross-sectional view showing a holder piece when a steering shaft is located at a reference position.
Fig. 2B is a cross-sectional view showing the holder piece when the steering shaft rotates in the counterclockwise direction from the reference position.
Fig. 2C is a cross-sectional view showing a semi-tubular step when the steering shaft is located at the reference position.
Fig. 3 is a perspective view showing a torsion spring.
Fig. 4 is a diagram showing the dimensions of a guide tube and the torsion spring.
Fig. 5 is a graph showing the relationship of a rotation angle and an operational reaction force.
Fig. 6 is a diagram showing the dimensions of the torsion spring and a collar in a second embodiment of a steering device.
Fig. 7 is graph showing the relationship of a rotation angle and an operational reaction force.

### EMBODIMENTS OF THE INVENTION

### [First Embodiment.]

A first embodiment of a rotational operation device will now be described.

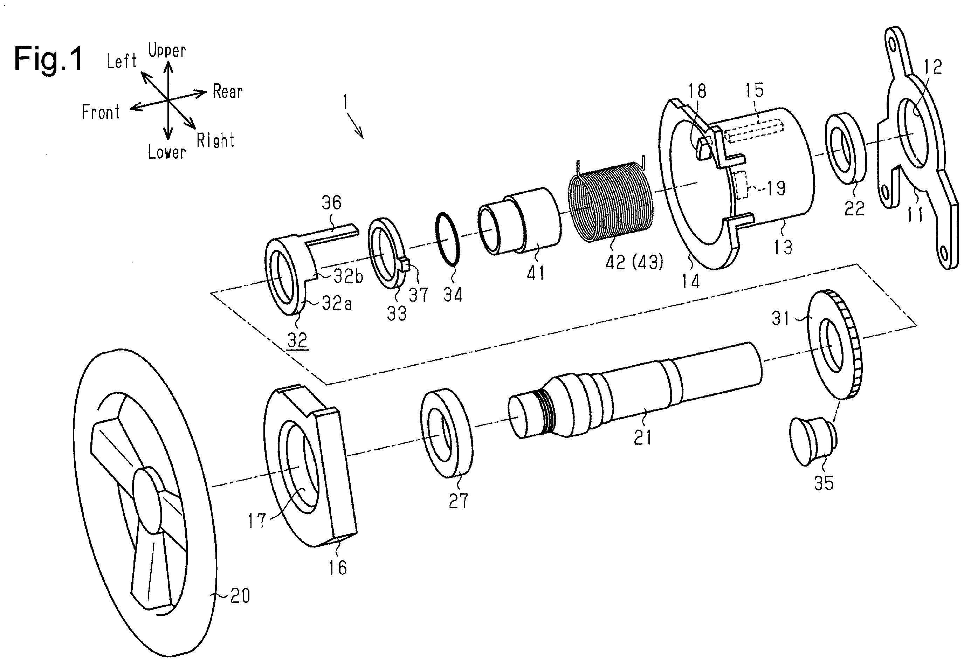

As illustrated in Fig. 1, a steering device 1, which is one example of a rotational operation device, includes a plate 11 fixed to a vehicle body (not illustrated). A plate hole 12 extends through the plate 11. The plate 11 includes a front surface to which a tubular case 13 is fixed. The axial direction of the tubular case 13 extends in the front-to-rear direction and corresponds to the axial direction of the plate hole 12. The tubular case 13 includes a front end having a flange 14 that gradually increases in diameter toward the front. The tubular case 13 includes an inner surface from which a spring stopper 15 projects. The spring stopper 15 extends in parallel to the axial direction of the tubular case 13. Further, the inner surface of the tubular case 13 includes first and second rotation restriction projections 18 and 19. When the tubular case 13 is viewed from the front in the axial direction, the spring stopper 15 is located at the twelve o'clock position, the first rotation restriction projection 18 is located at the ten o'clock position, and the second rotation restriction projection 19 is located at the two o'clock position. For example, the first rotation restriction projection 18 is located at the position rotated by 100° in the clockwise direction from the six o'clock position, and the second rotation restriction projection 19 is located at the position rotated by 100° in the counterclockwise direction from the six o'clock position.

A cover 16 is fixed to the flange 14. A cover hole 17 extends through the cover 16 in the axial direction of the tubular case 13. A cylindrical steering shaft 21 extends through the plate hole 12 of the plate 11, the tubular case 13, and the cover hole 17 of the cover 16. The steering shaft 21 is rotationally supported by the plate 11 with a plate bearing 22 and by the cover 16 with a cover bearing 27. The steering shaft 21 includes a front end to which a steering wheel 20 is coupled. The steering wheel 20 is rotated by a user. The steering wheel 20 corresponds to an operation member, and the steering shaft 21 corresponds to a rotation shaft.

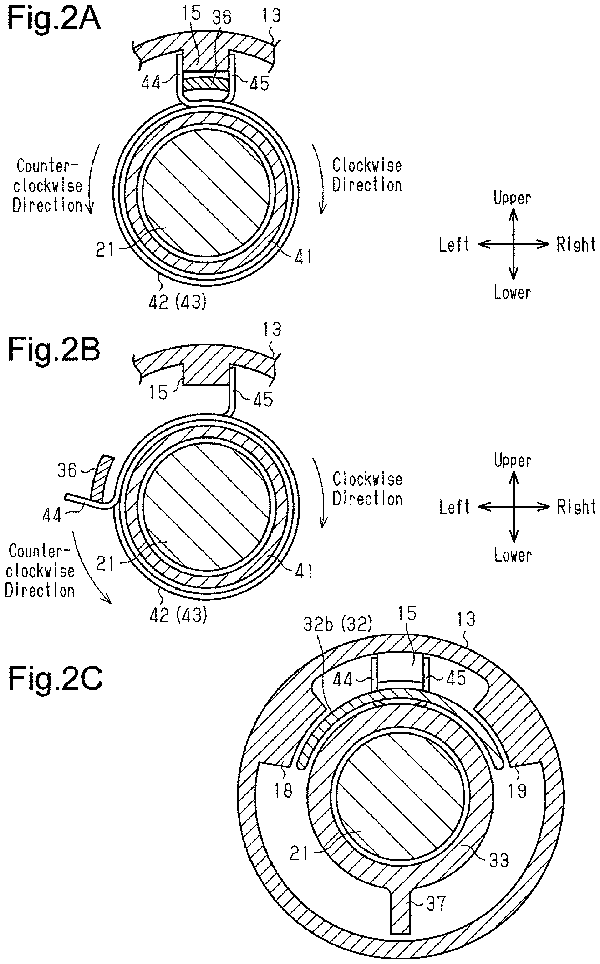

A gear 31, a holder 32, a rotation stopper 33, and a snap ring 34, sequentially from the ones closer to the cover 16, are fitted onto the portion of the steering shaft 21 between the cover bearing 27 and the plate bearing 22. The gear 31 is meshed with a rotary damper 35 that is rotationally supported by the flange 14 of the tubular case 13. The rotary damper 35 reduces the rotation speed of the gear 31 and consequently reduces the rotation speed of the steering shaft 21. The holder 32 includes a tubular holder body 32a and a semi-tubular step 32b that is continuous with the surface of the holder body 32a at the side closer to the plate 11. The holder body 32a is fitted to the steering shaft 21. That is, the holder 32 rotates integrally with the steering shaft 21. The surface of the semi-tubular step 32b at the side closer to the plate 11 includes a holder piece 36 extending in parallel to the axial direction of the tubular case 13. As illustrated in Fig. 2A, the holder piece 36 is located between the spring stopper 15 and the steering shaft 21 in the vertical direction (i.e., radial direction). The length of the holder piece 36 in the sideward direction is equal to the length of the spring stopper 15 in the sideward direction. The position where the middle portion of the holder piece 36 in the sideward direction vertically overlaps the middle portion of the spring stopper 15 in the sideward direction is defined as the reference position of the steering shaft 21.

As illustrated in Fig. 1, the rotation stopper 33 is tubular and rotatable about the steering shaft 21. As illustrated in Fig. 2C, the rotation stopper 33 includes an outer circumferential surface from which a restriction projection 37 extends. The rotation stopper 33 is arranged so that the first and second rotation restriction projections 18 and 19 are located in a rotation path of the restriction projection 37 when the rotation stopper 33 rotates. Further, the restriction projection 37 is located in a rotation path of the semi-tubular step 32b. The restriction projection 37 is located at the counterclockwise side of the first rotation restriction projection 18 and the clockwise side of the second rotation restriction projection 19. When the rotation of the steering shaft 21 rotates the holder 32, the semi-tubular step 32b abuts against the restriction projection 37. When the rotation of the steering shaft 21 further rotates the holder 32, the semi-tubular step 32b pushes the restriction projection 37 and rotates the rotation stopper 33. This allows the steering shaft 21 to rotate to the position where the restriction projection 37, which is pushed by the holder 32, abuts against the first or second rotation restriction projection 18 or 19. The gear 31, the holder 32, and the rotation stopper 33 are in contact with one another in the axial direction. The snap ring 34 restricts displacement of the gear 31, the holder 32, and the rotation stopper 33 relative to the steering shaft 21 in the axial direction.

A stepped guide tube 41 is fitted onto a portion of the steering shaft 21 between the snap ring 34 and the plate bearing 22. Further, a torsion spring 42 is fitted onto the guide tube 41. The torsion spring 42 is formed by spirally winding a metal wire (hereinafter referred to as winding wire). The torsion spring 42 corresponds to a helical torsion spring. Since the guide tube 41 is located between the steering shaft 21 and the torsion spring 42, the steering shaft 21 and the torsion spring 42 are not in contact with each other.

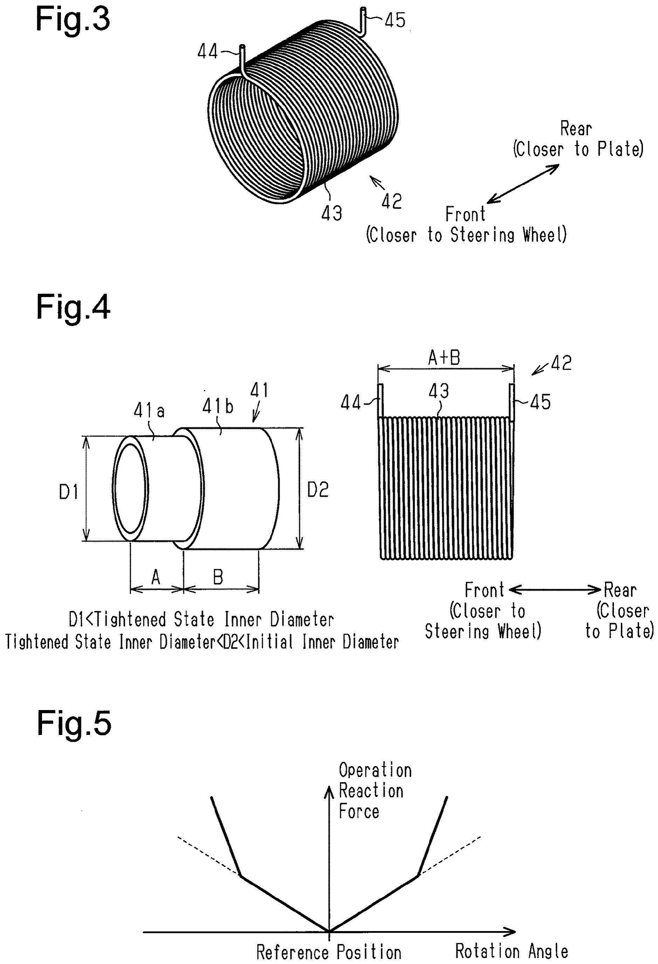

As illustrated in Fig. 3, the torsion spring 42 includes a coil 43 and first and second ends 44 and 45 that are the two opposite ends of the winding wire of the coil 43. In the assembled state, the first end 44 is located closer to the steering wheel 20, and the second end 45 is located closer to the plate 11. The first and second ends 44 and 45 are bent upwardly. As illustrated in Fig. 2A, the first end 44 is located at the counterclockwise side of the holder piece 36 and the spring stopper 15. Further, the first end 44 abuts against the left surfaces of the holder piece 36 and the spring stopper 15. The second end 45 is located at the clockwise side of the holder piece 36 and the spring stopper 15. Further, the second end 45 abuts against the right surfaces of the holder piece 36 and the spring stopper 15.

As illustrated in Fig. 4, the guide tube 41 includes a core portion 41a and an engagement portion 41b. In the assembled state, the core portion 41a is located at the side closer to the steering wheel 20, and the engagement portion 41 b is located at the side closer to the plate 11. The axial length of the core portion 41a is "A," and the axial length of the engagement portion 41b is "B." The axial length of the coil 43 is "A+B." The outer diameter of the core portion 41a is "D1," and the outer diameter of the engagement portion 41 b is "D2." The outer diameter D1 is approximately 0.9 times the tightened state inner diameter of the coil 43. The outer diameter D2 is greater than a tightened state inner diameter of the coil 43 and less than an initial inner diameter of the coil 43. The initial inner diameter of the coil 43 is the inner diameter of the coil 43 when the steering shaft 21 is located at the reference position. The tightened state inner diameter of the coil 43 is the inner diameter of the coil 43 when the steering shaft 21 rotates to the position where the restriction projection 37 abuts against the first or second rotation restriction projection 18 or 19.

The operation of the steering device 1 will now be described. A case in which the steering shaft 21 is rotated from the reference position in the counterclockwise direction when the steering wheel 20 is operated will now be described.

Referring to Fig. 2B, when the steering shaft 21 is rotated in the counterclockwise direction, the holder 32 rotates integrally with the steering shaft 21 in the counterclockwise direction. That is, the holder piece 36 rotates in the counterclockwise direction. This causes the left surface of the holder piece 36 to abut against the first end 44. Thus, the first end 44 pushes and moves the holder piece 36 in the counterclockwise direction. The torsion spring 42 accumulates elastic force as the holder piece 36 rotates in the counterclockwise direction. That is, the torsion spring 42 rotates in the counterclockwise direction. This tightens the coil 43. The tightening of the coil 43 produces operational reaction force, and the operational reaction force is perceived by the user.

In this process, first, when the steering wheel 20 is not operated, the inner diameter of the coil 43 continues to be the initial inner diameter. From this state, when operation of the steering wheel 20 rotates the steering shaft 21, the coil 43 tightens. This decreases the inner diameter of the coil 43 from the initial inner diameter. After the inner diameter of the coil 43 becomes equal to the outer diameter D2 of the engagement portion 41 b, only the portion of the coil 43 that is not in contact with the engagement portion 41b tightens. Thus, the virtual number of windings of the coil 43 is decreased. Since the spring load is inversely proportional to the number of windings, the increasing rate of the operational reaction force with respect to the rotation angle increases (refer to Fig. 5) after the inner diameter of the coil 43 becomes equal to the outer diameter D2 of the engagement portion 41 b.

When the axial length B of the engagement portion 41b is increased from the present example and the axial length A of the core portion 41a is decreased from the present example, the number of windings decreases after the inner diameter of the coil 43 becomes equal to the outer diameter D2 of the engagement portion 41 b. This further increases the gradient after the change point. Further, when the outer diameter D2 of the engagement portion 41 b is greater than the present example, the inner diameter of the coil 43 becomes equal to the outer diameter D2 of the engagement portion 41b more quickly. This further decreases the rotation angle at which the change point appears.

As described above, the present embodiment has the advantages described below.
(1) During the process in which the torsion spring 42 tightens, the number of windings of the coil 43 decreases. Since the spring load is inversely proportional to the number of windings, the gradient of the operational reaction force increases as the number of windings decreases. Accordingly, the operational reaction force can be changed.
(2) The guide tube 41, which is fitted into the torsion spring 42, is shaped so that a single spring can change the operational reaction force near a terminal end of rotation.
(3) The guide tube 41 is fitted into the entire coil 43 in the axial direction. Further, the outer diameter D1 of the portion of the guide tube 41 that excludes the engagement portion 41 b and changes the operational reaction force, namely, the core portion 41a, is less than the tightened state inner diameter of the coil 43. Thus, a suitable gap is obtained between the coil 43 and the core portion 41a. This allows a suitable reaction force to be set without interfering with the tightening of the coil 43.

The first embodiment may be modified as follows.

The outer diameter D2 of the engagement portion 41 b may be changed as long as the outer diameter D2 is greater than the tightened state inner diameter of the coil 43 and less than the initial inner diameter of the coil 43.

The axial length B of the engagement portion 41b may be changed to any length that is less than the axial length of the coil 43.

The engagement portion 41 b may be stepped to have different multiple outer diameters. In this case, each of the outer diameters is greater than the tightened state inner diameter of the coil 43 and less than the initial inner diameter of the coil 43. This structure allows the operational reaction force to change in multiple stages.

The engagement portion 41 b may be separated into segments in the axial direction of the coil 43. That is, the engagement portion 41 b may include a plurality of segments that are arranged separately from one another in the axial direction. In this case, the segments may have different outer diameters or different axial lengths as long as each outer diameter is greater than the tightened state inner diameter of the coil 43 and less than the initial inner diameter of the coil 43 and the total axial length of the segments is less than the axial length of the coil 43.

The outer diameter D1 of the core portion 41 a may be changed to any outer diameter that is less than the tightened state inner diameter of the coil 43. In this case, the core portion 41 a may be stepped to have different multiple outer diameters or arranged in segments in the axial direction of the coil 43.

When the engagement portion 41b has a great axial length B and can hold the torsion spring 42 at a proper position, the core portion 41a may be omitted.

### [Second Embodiment]

A second embodiment of a rotational operation device will now be described. In the second embodiment, a guide tube (not illustrated) having a uniform outer diameter set as D1 is fitted onto the steering shaft 21 instead of the guide tube 41 of the first embodiment, and the torsion spring 42 is fitted onto the guide tube.

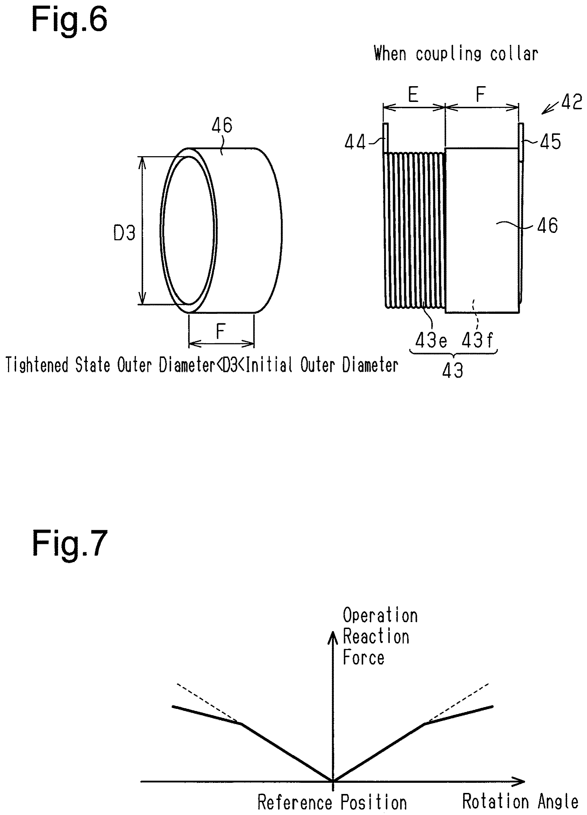

Referring to Fig. 6, a tubular collar 46 is fitted onto the torsion spring 42. The axial length of the collar 46 is F. The axial length of the coil 43 is greater than the axial length F of the collar 46. More specifically, the coil 43 is divided in the axial direction into a coil portion 43f that is not in contact with the collar 46 and a coil portion 43e that is in contact with the collar 46. The axial length of the coil portion 43f is F, and the axial length of the coil portion 43e is E. That is, the axial length of the coil 43 is E+F. The inner diameter of the collar 46 is D3. The inner diameter D3 is greater than the tightened state outer diameter of the coil 43 and less than the initial outer diameter of the coil 43. The initial outer diameter of the coil 43 is the outer diameter of the coil portion 43e when the steering shaft 21 is located at the reference position. The tightened state outer diameter of the coil 43 is the outer diameter of both of the coil portions 43e and 43f when the steering shaft 21 rotates to the position where the restriction projection 37 abuts against the first or second rotation restriction projection 18 or 19. The entire collar 46 corresponds to "an engagement portion of a collar" of the present invention.

The operation of the steering device 1 will now be described.

When the steering wheel 20 is not operated, in the coil 43, the coil portion 43f is tightened so that the outer diameter is equal to the inner diameter D3 of the collar 46, and the coil portion 43e that is not in contact with the collar 46 continues to have an outer diameter that is the initial outer diameter. From this state, when the steering wheel 20 is operated and the steering shaft 21 is rotated, only the coil portion 43e of the coil 43 that is not in contact with the collar 46 is tightened. This decreases the outer diameter of the coil portion 43e from the initial outer diameter. Consequently, after the outer diameter of the coil portion 43e becomes equal to the inner diameter D3 of the collar 46, the coil 43 is entirely tightened. This increases the virtual number of windings of the coil 43. Since the spring load is inversely proportional to the number of windings, the increasing rate of the operational reaction force with respect to the rotation angle decreases (refer to Fig. 7) after the outer diameter of the coil portion 43e becomes equal to the inner diameter D3 of the collar 46.

When the axial length F of the collar 46 is increased from the present example and the axial length E of the coil portion 43e that is not in contact with the collar 46 is decreased from the present example, the number of windings is less when an operation is first performed. In this case, the gradient is further increased when an operation is first performed. Further, when the inner diameter D3 of the collar 46 is increased from the present example, the outer diameter of the coil portion 43e that is not in contact with the collar 46 becomes equal to the inner diameter D3 of the engagement portion 41b more quickly. This further decreases the rotation angle at which the change point appears.

As described above, the present embodiment has the following advantages.
(4) During the process in which the torsion spring 42 tightens, the number of windings of the coil 43 increases. Since the spring load is inversely proportional to the number of windings, the gradient of the operational reaction force decreases as the number of windings increases. Accordingly, the operational reaction force can be changed.
(5) The collar 46, which is fitted onto the torsion spring 42, is shaped so that a single spring can change the operational reaction force near a terminal end of rotation.

The second embodiment may be modified as follows.

The inner diameter D3 of the collar 46 may be changed as long as the inner diameter D3 is greater than the tightened state outer diameter of the coil 43 and less than the initial outer diameter of the coil 43.

The axial length F of the collar 46 may be changed to a length that is less than the axial length of the coil 43.

The collar 46 may be stepped to have different inner diameters. In this case, each of the inner diameters is greater than the tightened state outer diameter of the coil 43 and less than the initial outer diameter of the coil 43. This structure allows operational reaction force to change in multiple stages.

The collar 46 may be separated into segments in the axial direction of the coil 43. That is, the collar 46 may include a plurality of segments that are arranged separately from one another in the axial direction. In this case, the segments may have different inner diameters or different axial lengths as long as each inner diameter is greater than the tightened state outer diameter of the coil 43 and less than the initial outer diameter of the coil 43 and the total axial length of the segments is less than the axial length of the coil 43.

The collar 46 may include a cover having an inner diameter that is greater than the initial outer diameter of the coil 43. In this case, the cover may be stepped to have different inner diameters or arranged in segments in the axial direction of the coil 43. In the structure of this modified example, the portion of the collar 46 excluding the cover corresponds to "the engagement portion of the collar" of the present invention, and the portion of the coil 43 covered by the cover corresponds to the coil portion 43e that is not in contact with the collar 46.

Each of the above embodiments may be modified as described below.

The present invention is not limited to the steering device 1 (i.e., device dedicated for vehicle). For example, the rotational operation device of the present invention may be applied to a rotary switch or the like. In this case, the tightening of the helical torsion spring produces operational reaction force when a knob (operation member) is rotated to adjust, for example, the light, temperature, or volume.

## Claims

1. A rotational operation device comprising:
a rotation shaft configured to rotate when an operation member is operated;
a holder fixed to the rotation shaft;
a helical torsion spring fitted onto the rotation shaft, wherein the helical torsion spring is configured to be tightened when pushed by the holder in a rotation direction of the rotation shaft; and
a guide tube fitted onto the rotation shaft and fitted into the helical torsion spring, wherein
the guide tube includes an engagement portion having an outer diameter that is greater than a tightened state inner diameter of the helical torsion spring and less than an initial inner diameter of the helical torsion spring, and
the engagement portion has a length that is less than a length of the helical torsion spring in an axial direction of the helical torsion spring.

2. The rotational operation device according to claim 1, wherein the guide tube includes a core portion having an outer diameter that is less than the tightened state inner diameter of the helical torsion spring.

3. The rotational operation device according to claim 1 or 2, wherein
the engagement portion of the guide tube is stepped to have different outer diameters, and each of the outer diameters is greater than the tightened state inner diameter of the helical torsion spring and less than the initial inner diameter of the helical torsion spring.

4. A rotational operation device comprising:
a rotation shaft configured to rotate when an operation member is operated;
a holder fixed to the rotation shaft;
a helical torsion spring fitted onto the rotation shaft, wherein the helical torsion spring is configured to be tightened when pushed by the holder in a rotation direction of the rotation shaft; and
a collar fitted onto the helical torsion spring, wherein
the collar includes an engagement portion having an inner diameter that is greater than a tightened state outer diameter of the helical torsion spring and less than an initial outer diameter of the helical torsion spring, and
the engagement portion has a length that is less than a length of the helical torsion spring in an axial direction of the helical torsion spring.

5. The rotational operation device according to claim 4, wherein
the engagement portion of the collar is stepped to have different inner diameters, and
each of the inner diameters is greater than the tightened state outer diameter of the helical torsion spring and less than the initial outer diameter of the helical torsion spring.
